(19) Europäisches Patentamt
European Patent Office
Office européen des brevets

(11) EP 2 912 343 B1

(12) **EUROPÄISCHE PATENTSCHRIFT**

(45) Veröffentlichungstag und Bekanntmachung des Hinweises auf die Patenterteilung:
**12.04.2017 Patentblatt 2017/15**

(21) Anmeldenummer: **13788906.9**

(22) Anmeldetag: **14.10.2013**

(51) Int Cl.:
*F16G 13/02* (2006.01)   *F16G 13/04* (2006.01)
*F16G 13/06* (2006.01)   *F16G 13/08* (2006.01)

(86) Internationale Anmeldenummer:
**PCT/EP2013/071373**

(87) Internationale Veröffentlichungsnummer:
**WO 2014/063941 (01.05.2014 Gazette 2014/18)**

(54) **GELENKKETTE UND GELENKKETTENANTRIEB, INSBESONDERE FÜR STAHLWASSERBAU UND KETTENBECHERWERKE**

LINK CHAIN AND LINK-CHAIN DRIVE, IN PARTICULAR FOR HYDRAULIC STEELWORK AND CHAIN BUCKET ELEVATORS

CHAÎNE ARTICULÉE ET MÉCANISME D'ENTRAÎNEMENT D'UNE CHAÎNE ARTICULÉE, EN PARTICULIER POUR UNE CONSTRUCTION HYDRAULIQUE EN ACIER ET UN ÉLÉVATEUR À GODETS SUR CHAÎNE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **26.10.2012 DE 102012110241**
**12.02.2013 DE 102013101386**
**07.03.2013 DE 102013102268**

(43) Veröffentlichungstag der Anmeldung:
**02.09.2015 Patentblatt 2015/36**

(73) Patentinhaber: **Grobbel, Burkhard**
**57392 Schmallenberg (DE)**

(72) Erfinder: **Grobbel, Burkhard**
**57392 Schmallenberg (DE)**

(74) Vertreter: **Beckmann, Jürgen**
**Dr. Jürgen Beckmann**
**Patentanwalt**
**An der Baumschule 23**
**57462 Olpe (DE)**

(56) Entgegenhaltungen:
**EP-A2- 1 574 747    DE-B- 1 203 062**
**GB-A- 187 039      US-A- 2 266 688**

**Beschreibung**

Die Erfindung betrifft Gelenkketten und Gelenkkettenantriebe.

Herkömmliche Gelenkketten sind beispielsweise aus der WO 2010/108816 A1 bekannt. Sie enthalten Kettenglieder bestehend aus vorzugsweise paarweise angeordneten Kettenlaschen, welche drehbeweglich über Kettenbolzen gekoppelt sind.

Vor diesem Hintergrund war es Aufgabe der vorliegenden Erfindung, Gelenkkettenantriebe bereitzustellen, welche einfach und prozesssicher herzustellen sind und einen robusten Betrieb erlauben.

Diese Aufgabe wird durch einen Gelenkkettenantrieb nach Anspruch 1 gelöst. Vorteilhafte Ausgestaltungen sind in den Unteransprüchen 2-9 enthalten.

Die Antriebräder gemäß WO2010/1088A1 oder der WO2013/060823 sind aus dem Stand der Technik bekannt.

Des Weiteren ist der Gelenkkettenantrieb gemäß dem Oberbegriff des unabhängigen Anspruchs 1 aus GB187039 A bekannt.

Gemäß einem ersten eigenständigen Aspekt betrifft die Erfindung einen Gelenkkettenantrieb enthaltend eine Gelenkkette, welche die folgenden Komponenten enthält:

-  Mindestens eine erste Kettenlasche, die eine Öffnung aufweist. In der Regel werden in jedem Kettenglied zwei oder mehr gleichartig gestaltete Kettenlaschen parallel zueinander vorgesehen sein. Die Öffnungen dieser Kettenlaschen sind dabei typischerweise fluchtend angeordnet und dienen, wie nachfolgend näher erläutert wird, der Kopplung zum nächsten Kettenglied.

-  (Mindestens) eine zweite Kettenlasche, an welcher ein Kettenbolzen angebracht ist, der verschiebebeweglich in der vorgenannten Öffnung der ersten Kettenlasche gelagert ist.

Der Kettenbolzen steht typischerweise senkrecht zur Erstreckungsrichtung bzw. Ebene der zweiten Kettenlasche. Weiterhin hat er gemäß der vorliegenden Erfindung zumindest abschnittsweise die Form eines Kreiszylinders, wobei jedoch auch andere prismatische Formen mit verschiedenen Querschnitten (Ellipse, Polygon etc.) und/oder sogar unregelmäßige Formen für den Kettenbolzen möglich sind. Schließlich ist der Kettenbolzen vorzugsweise fest mit der zweiten Kettenlasche verbunden, z. B. durch einen Presssitz oder durch Schweißung, wobei alternativ jedoch auch eine bewegliche Verbindung möglich ist.

Die Verschiebebeweglichkeit des Kettenbolzens in der Öffnung der ersten Kettenlasche soll ein Ausmaß haben, welches signifikant größer ist als eine allein aufgrund von Toleranzen vorhandene Verschiebebeweglichkeit (wie sie faktisch immer z. B. bei der Lagerung eines kreisrunden Kettenbolzens in einer komplementären kreisrunden Öffnung auftritt). Typischerweise beträgt die Verschiebebeweglichkeit des Kettenbolzens daher mehr als 5%, mehr als 10%, mehr als 50%, oder sogar mehr als 100% des Radius des Kettenbolzens. In absoluten Werten beträgt die Verschiebebeweglichkeit vorzugsweise mehr als 1 mm, mehr als 2 mm, mehr als 3 mm, mehr als 5 mm, mehr als 10 mm, oder mehr als 20 mm. Des Weiteren ist der Kettenbolzen in der Regel zusätzlich auch drehbeweglich (zumindest um einen begrenzten Drehwinkel) in der Öffnung gelagert. Während bei herkömmlichen Gelenkketten die Kettenglieder nur mit einem Rotations-Freiheitsgrad miteinander verbunden sind, wird bei der oben beschriebenen Gelenkkette eine Kopplung zwischen der ersten und der zweiten Kettenlasche (und damit zwischen den zugehörigen Kettengliedern) mit einem translatorischen Freiheitsgrad erreicht. Die Verschiebebeweglichkeit erlaubt komplexere Bewegungsabläufe der Gelenkkette. Beim Abknicken bzw. Umlenken der Gelenkkette kann dies zu einer Verminderung des Verschleißes genutzt werden. Letzteres ist beispielsweise möglich, wenn die im Stand der Technik übliche Gleitbewegung bei einer Rotation des Kettenbolzens in der Öffnung in eine verschleißarme Wälzbewegung überführt wird.

Die Öffnung der ersten Kettenlasche ist vorzugsweise mit einer Wälzfläche versehen, entlang welcher der Kettenbolzen abwälzen kann. Die Wälzfläche ist typischerweise geometrisch an die Form des Kettenbolzens angepasst, sodass die gewünschte Wälzbewegung kinematisch möglich ist. Zum anderen sind vorzugsweise die Materialeigenschaften der Wälzfläche entsprechend eingestellt, z. B. indem diese Fläche gehärtet ist.

Hinsichtlich der Geometrie der genannten Wälzfläche ist eine Ausführungsform bevorzugt, bei der zumindest ein Teil der Wälzfläche die Form eines Kreisbogens um den Mittelpunkt eines zweiten Kettengelenkes der ersten Kettenlasche hat. Ein (kreiszylindrischer) Kettenbolzen, welcher auf diesem Kreisbogen der Wälzfläche abwälzt, behält dann immer denselben Abstand von dem genannten Mittelpunkt, so dass sich die effektive Länge des zugehörigen Kettengliedes nicht ändert.

Die Öffnung in der ersten Kettenlasche kann beispielsweise durch eine Ausnehmung in der Kettenlasche gebildet werden, was einen einfachen und Gewicht sparenden Aufbau der Gelenkkette ermöglicht.

Gemäß einer anderen Ausführungsform ist die Öffnung der ersten Kettenlasche in einer mit der ersten Kettenlasche verbundenen Buchse ausgebildet. Zwischen dem Kettenbolzen und der ersten Kettenlasche liegt somit die genannte Buchse, d. h. der Kettenbolzen kommt nur mittelbar mit der ersten Kettenlasche in Berührung. Die Materialpaarung zwischen Kettenbolzen und Buchse kann dann unabhängig vom Material der ersten Kettenlasche optimal gewählt werden. Die Buchse ist vorzugsweise fest mit der ersten Kettenlasche verbunden, z. B. durch Presssitz oder Verschweißen. Wenn mehrere (erste) Kettenlaschen parallel zueinander angeordnet sind, erstreckt sich die Buchse vorzugsweise im Wesentlichen nur über die Breite jeweils einer Kettenlasche, um Gewicht zu sparen und um einen direkten Angriff eines Antriebskettenrades an dem Kettenbolzen zu ermöglichen.

An dem Kettenbolzen der Gelenkkette ist vorzugsweise ein Träger für Anbauelemente gelagert, beispielsweise ein Winkelhalter zur Anbringung der Becher eines Becherwerks. Der Träger kann dabei an der ersten Kettenlasche, an der zweiten Kettenlasche, und/oder an einer auf dem Kettenbolzen gelagerten Zusatzbuchse angebracht sein, z. B. durch Verschweißen oder einstückiges Ausbilden mit den genannten Elementen.

Erfindungsgemäß ist es bevorzugt, wenn nicht nur ein Kettenglied, sondern mehrere, vorzugsweise (abwechselnd) jedes zweite oder auch jedes Kettengelenk in der beschriebenen Weise (mit erster und zweiter Kettenlasche) ausgestaltet sind.

Des Weiteren können die erste und die zweite Kettenlasche unterschiedlich konstruiert sein oder identisch konstruiert sein.

Bei einer unterschiedlichen Konstruktion kann jede erste Kettenlasche beispielsweise zwei Öffnungen und jede zweite Kettenlasche zwei Kettenbolzen aufweisen, wobei die Kettenbolzen der zweiten Kettenlaschen jeweils in einer Öffnung einer vorangehenden bzw. einer nachfolgenden ersten Kettenlasche gelagert sind. Mit anderen Worten sind bei einer solchen Gelenkkette erste und zweite Kettenlaschen abwechselnd angeordnet.

Bei einer identischen Konstruktion von erster und zweiter Kettenlasche kann an einer solchen Kettenlasche an einem Ende eine Öffnung und am anderen Ende ein Bolzen angeordnet sein, wobei der Bolzen in die Öffnung des vorangehenden Kettengliedes eingreift.

Im Prinzip könnte die Gelenkkette aus einer Folge von einzelnen ersten Kettenlaschen und einzelnen zweiten Kettenlaschen bestehen. Schon aus Gründen einer symmetrischen Kraftwirkung ist es indes bevorzugt, wenn die ersten Kettenlaschen oder die zweiten Kettenlaschen (vorzugsweise beide) jeweils zwei- oder mehrfach parallel vorhanden sind, so dass sie zwischen sich in einer symmetrischen Anordnung die jeweils andere

Kettenlasche aufnehmen können. Mit anderen Worten sind bei einer bevorzugten Ausführungsform mindestens zwei erste Kettenlaschen und/oder mindestens zwei zweite Kettenlaschen vorgesehen, die parallel zueinander am selben Kettenbolzen gelagert sind. Vorzugsweise erfolgt diese Lagerung weiterhin mit einem axialen Abstand (axial bezüglich des Kettenbolzens), so dass im entstehenden Freiraum die Kettenlaschen eines angrenzenden Kettengliedes gelagert werden können.

Gemäß einem zweiten eigenständigen Aspekt betrifft die Erfindung eine Gelenkkette, welche eine Folge von Einheiten der nachfolgend definierten Art enthält:

- Jede Einheit enthält mindestens drei Kettenlaschen, von denen aufgrund ihrer Anordnung nachfolgend zwei als "Außenlaschen" und eine als "Innenlasche" bezeichnet werden. Vorzugsweise enthält sie mindestens zwei Außenlaschen und mindestens zwei Innenlaschen.

- In jeder Einheit sind die vorgenannten Außenlaschen an einem ersten Ende auf einem ersten Kettenbolzen, welcher zur betreffenden Einheit gehört, befestigt. Weiterhin ist zwischen diesen Außenlaschen die Innenlasche beweglich auf dem ersten Kettenbolzen angeordnet.

- Die Außenlaschen der betrachteten Einheit sind an einem zweiten Ende beweglich auf einem zweiten Kettenbolzen gelagert, welcher ebenfalls zur betrachteten Einheit gehört. Wenn die betrachtete Einheit nicht die letzte der Folge von Einheiten ist, ist weiterhin zwischen den Außenlaschen auf dem zweiten Kettenbolzen die Innenlasche einer nachfolgenden Einheit befestigt.

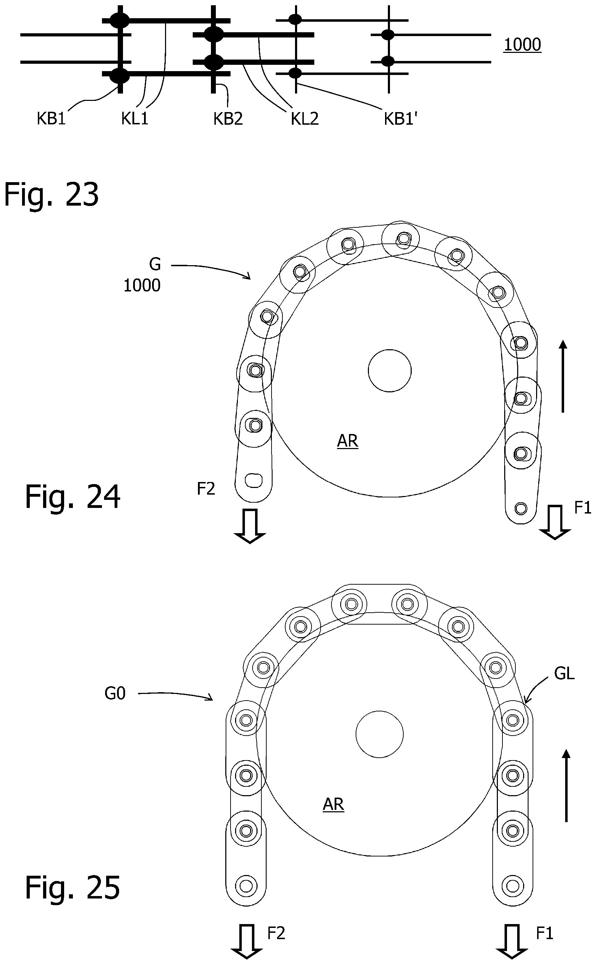

Eine Ausführungsform der beschriebenen Gelenkkette ist in Figur 23 schematisch dargestellt. Diese Gelenkkette hat den Vorteil, dass sie keine weitere Sicherung der Kettenlaschen auf den Kettenbolzen benötigt. Die Außenlaschen einer jeden Einheit sind nämlich durch ihre Befestigung am ersten Kettenbolzen bereits in einem festen axialen Abstand gesichert und sichern ihrerseits die zwischen ihnen befindliche Innenlasche. Weiterhin ist mit dieser Innenlasche der zweite Kettenbolzen fest verbunden, so dass die betrachtete Einheit insgesamt nicht auseinanderfallen kann. Durch Lagerung der Außenlaschen einer nachfolgenden Einheit auf dem zweiten Kettenbolzen der vorangehenden Einheit wird darüber hinaus eine unlösbare Kopplung zwischen den Einheiten erreicht. Insgesamt erhält die Folge von Einheiten somit quasi automatisch einen stabilen Aufbau.

Die Gelenkkette kann optional auf einem begrenzten Stück ihrer Länge aus der beschriebenen Folge von Einheiten bestehen, wobei die Enden dieser Folge mit einer anderen Kettenbauweise fortgesetzt und/oder an Vorrichtungen befestigt sein können. Vorzugsweise ist es indes so, dass die Gelenkkette komplett aus der Folge von Einheiten besteht, wobei diese Folge weiterhin vorzugsweise ringförmig geschlossen ist. Jede Einheit ist dann sowohl mit einer vorangehenden als auch einer nachfolgenden Einheit gekoppelt.

Der Gelenkkettenantrieb gemäß dem zweiten Aspekt kann vorzugsweise mit einem Gelenkkettenantrieb gemäß dem ersten Aspekt kombiniert werden. Das heißt, dass die Innenlaschen und/oder die Außenlaschen der Einheiten eine Öffnung aufweisen, mit der sie verschiebebeweglich auf dem zugehörigen Kettenbolzen gelagert sind. Eine solche Ausführungsform ist besonders vorteilhaft, da sie eine verschleißarme Wälzbewegung in den Kettengelenken ermöglicht, was wiederum die direkte Lagerung der Kettenlaschen auf Kettenbolzen erlaubt.

Gemäß einem dritten eigenständigen Aspekt betrifft die Erfindung eine Gelenkkette, bei welcher mindestens ein Kettengelenk die folgenden Komponenten enthält:

- einen Kettenbolzen;

- (mindestens) zwei Kettenlaschen;

- (mindestens) zwei zugehörige Trägerbuchsen, über welche die vorgenannten Kettenlaschen auf dem Kettenbolzen gelagert sind, wobei zwischen den Kettenlaschen der Kettenbolzen für den Angriff eines Antriebskettenrades frei zugänglich ist. Vorzugsweise ist der Kettenbolzen ferner im axialen Bereich zwischen den Kettenlaschen (bzw. Trägerbuchsen) einschließlich zylindrisch ausgebildet.

Vorteilhafterweise haben bei der genannten Gelenkkette alle Kettengelenke den beschriebenen Aufbau. Des Weiteren sind typischerweise 4·m (mit m = 1, 2, 3, ...) Kettenlaschen mit entsprechend 4·m Trägerbuchsen auf jedem Kettenbolzen gelagert, wobei in einem symmetrischen Aufbau 2·m Laschen "links" und axial beabstandet davon 2·m Laschen "rechts" angeordnet sind. Des Weiteren kann die Gelenkkette optional auch Merkmale der übrigen Gelenkketten der vorliegenden Anmeldung aufweisen.

Die beschriebene Gelenkkette hat den Vorteil, dass sie durch ihren einfachen Aufbau sehr kostengünstig herstellbar ist. Insbesondere kann für den (vorzugsweise gehärteten) Kettenbolzen ein einfacher zylindrischer Körper verwendet werden (eventuell mit geringfügigen Bearbeitungen durch Drehen). Die Gelenkkette wird vorteilhafterweise in einem lastfrei bzw. lastarm abknickenden Gelenkkettenantrieb eingesetzt, da hierbei die Gelenkflächen reduziert werden können.

Die mindestens zwei Kettenlaschen der Gelenkkette sind vorzugsweise durch ein Anbauelement verbunden. Dies kann beispielsweise eine Tragplatte sein, wenn die Gelenkkette in einem Plattenband eingesetzt wird. Das Anbauelement sorgt dann für einen konstanten axialen Abstand zwischen den Kettenlaschen.

Der Kettenbolzen kann optional auf einer oder auf zwei Seiten über die dortige(n) Kettenlasche(n) hinaus verlängert sein. Ein solcher Überstand kann für den Angriff eines (weiteren) Antriebskettenrades ausgenutzt werden. Zusätzlich oder alternativ kann an einem solchem Überstand auch eine Rolle angebracht werden, wie sie zur Führung der Ketten bei Plattenbändern üblich ist.

Da die Trägerbuchsen nur der Lagerung der Kettenlaschen auf dem Kettenbolzen dienen, ist ihre axiale Breite typischerweise in derselben Größenordnung wie die Breite der Kettenlasche. Insbesondere kann die Breite der Trägerbuchsen zwischen ca. 50 % und 500 %, vorzugsweise zwischen ca. 100 % und 200 % der Breite der Kettenlaschen betragen.

Gelenkkettenantriebe

Die Erfindung umfasst einen Gelenkkettenantrieb, enthaltend eine (herkömmliche oder erfindungsgemäße) Gelenkkette sowie ein damit zusammenwirkendes Antriebskettenrad. An dem Antriebskettenrad können dabei insbesondere mehrere Zwischenkörper beweglich gelagert sein, wobei die Anzahl der Zwischenkörper so gewählt ist, dass (mindestens) ein Zwischenkörper an jedes einlaufende Kettengelenk der Gelenkkette angreifen kann.

Die konkrete kinematische und/oder dynamische Auslegung des Gelenkkettenantriebes kann auf unterschiedliche Weise erfolgen. Insbesondere kann die Gelenkkette in Umschlingung (beispielsweise um ca. 90° bis ca. 180°) um das Antriebskettenrad geführt sein. Alternativ kann das Antriebskettenrad jedoch auch als ein Zwischenantrieb wirken, wobei es in ein im Wesentlichen gerade verlaufendes Stück der Gelenkkette eingreift. Gemäß einer bevorzugten Ausführung des Gelenkkettenantriebes sind dessen Antriebskettenrad und Gelenkkette so aufeinander abgestimmt, dass eine Kraftübertragung vom Antriebskettenrad auf die Gelenkkette im Betriebszustand nur an maximal zwei Kettengliedern gleichzeitig erfolgt. Vorzugsweise erfolgt diese Kraftübertragung im Wesentlichen (d. h. zu mehr als 70 %, vorzugsweise zu mehr als 80%, besonders bevorzugt zu mehr als 90% einer Radumdrehung von 360°) nur an einem einzigen Kettenglied. Bei einer Umschlingung des Antriebskettenrades durch die Gelenkkette kann diese Bedingung dadurch erreicht werden, dass der wirksame Teilkreis des Antriebskettenrades (etwas) kleiner ist als der ideale Teilkreis der Gelenkkette. Die Gelenkpunkte der Kette bewegen sich daher unterhalb des Teilkreises der Lagerungen. Hinter den ersten vom Antriebskettenrad gegriffenen Kettengliedern liegen die übrigen Kettenglieder dann lose (unbelastet) auf dem Antriebskettenrad auf. Dies hat verschleißtechnisch den Vorteil, dass im Wesentlichen kein Abknicken der Gelenkkette unter Kraftbelastung stattfindet.

Weiterhin betrifft die Erfindung einen Gelenkkettenantrieb mit den folgenden Komponenten:

- Einem Antriebsrad (mit oder ohne Zähne), bei dem es sich beispielsweise um ein beliebiges Kettenrad handeln kann. Insbesondere kann das Antriebsrad als Antriebskettenrad gemäß der WO 2010/108816 A1 oder der WO 2013/060823 A1 ausgestaltet sein.
- Eine Gelenkkette der oben beschriebenen Art nach dem ersten Aspekt der Erfindung (mit einer ersten Kettenlasche mit einer Öffnung und einer zweiten Kettenlasche mit einem Kettenbolzen, der verschiebebeweglich in der Öffnung gelagert ist).

Das Antriebsrad und die Gelenkkette sollen dabei so aufeinander abgestimmt sein, dass der Kettenbolzen der zweiten Kettenlasche beim Umlauf der Gelenkkette um das Antriebsrad zumindest abschnittweise eine Wälzbewegung in der Öffnung der ersten Kettenlasche ausführt.

Der Bewegungsabschnitt, in dem die genannte Wälzbewegung auftritt, kann insbesondere im Bereich des Einlaufens der Gelenkkette in das Antriebsrad liegen, besonders bevorzugt im Bereich des Einlaufens (oder Auslaufens) des Kettentrums, welcher unter der höheren Belastung steht. In diesem Falle erfolgt das Abknicken der Kettenglieder unter Last durch eine verschleißarme Wälzbewegung, was für die Lebensdauer der Gelenkkette von erheblichem Vorteil ist.

Die Erfindung umfasst ferner ein Plattenband, ein Rollenband, ein Zellenband, eine Fahrtreppe bzw. einen Fahrsteig, und/oder ein Kettenbecherwerk, enthaltend mindestens ein Antriebskettenrad und/oder eine Gelenkkette und/oder einen Gelenkkettenantrieb gemäß den oben beschriebenen Ausführungsformen.

Im Folgenden wird die Erfindung mit Hilfe der Figuren beispielhaft näher erläutert, wobei ähnliche oder identische Teile jeweils mit Bezugszeichen gekennzeichnet sind, die sich um Vielfache von 100 unterscheiden. Wichtige Teile tragen drüber hinaus identische Bezugszeichen aus Buchstaben. Es zeigt:

Fig. 1          einen Gelenkkettenantrieb mit Kettenlaschen mit mindestens einem Langloch;

Fig. 2          einen Schnitt entlang der Linie L-L von Figur 1;

Fig. 3          einen Querschnitt durch einen Kettenbolzen der Gelenkkette von Figur 1;

Fig. 4          eine Seitenansicht der Kettenlaschen der Gelenkkette von Figur 1;

Fig. 5          zwei über ein Langloch verbundene Kettenlaschen;

Fig. 6          einen Schnitt entlang der Linie LIV-LIV von Figur 5;

Fig. 7, 8       eine Abwandlung der Ausführungsform von Figur 5, 6;

Fig. 9, 10      eine Abwandlung der Ausführungsform von Figur 7, 8;

Fig. 11, 12     eine Abwandlung der Ausführungsform von Figur 5, 6, bei welcher eine Buchse den Kettenbolzen umgibt;

Fig. 13, 14     eine Abwandlung der Ausführungsform von Figur 11, 12, bei welcher der Kettenbolzen direkt in Langlöchern der Kettenlaschen abwälzt;

Fig. 15, 16     eine Abwandlung der Ausführungsform von Figur 13, 14, bei welcher die Kettenlaschen ohne axialen Abstand angeordnet sind;

Fig. 17         eine Seitenansicht (oben), Draufsicht (Mitte) und Frontansicht (unten) einer Kettenlasche mit Wälzblechen;

Fig. 18-24      eine Gelenkkette mit einer verschiebebeweglichen Lagerung von Kettenlaschen, bei welcher die Kettenlaschen Einheiten aus Außenlaschen und Innenlaschen aufweisen;

Fig. 25         eine Seitenansicht einer herkömmlichen Gelenkkette eines Kettenbecherwerkes (Becher und deren Anbringung nicht dargestellt);

Fig. 26      eine Vorderansicht (oben) und eine Draufsicht (unten) einer erfindungsgemäßen Gabellaschenkette;

Fig. 27      eine Vorderansicht (links), eine Schnittansicht (Mitte), und eine Ansicht des Kettenbolzens (rechts) einer erfindungsgemäßen Blocklaschenkette;

Fig. 28      eine Seitenansicht der Gelenkkette eines Plattenbandes;

Fig. 29      einen Schnitt entlang der Linie XXVII-XXVII von Figur 28;

Fig. 30      eine Vorderansicht (links) und eine Seitenansicht (rechts) eines gestreckten Abschnitts der Gelenkkette der Figuren 1-4;

Fig. 31      eine Vorderansicht (links) und eine Seitenansicht (rechts) eines gestreckten Abschnitts einer Abwandlung der Gelenkkette von Figur 30, bei welcher alle Öffnungen der Kettenlaschen als Langlöcher ausgebildet sind;

Fig. 32      eine Vorderansicht (links) und eine Seitenansicht (rechts) eines gestreckten Abschnitts einer Gelenkkette, welche für ein Kettenbecherwerk optimiert ist;

Fig. 33      eine Seitenansicht der Gelenkkette von Figur 32 auf einem zahnlosen Antriebsrad eines Kettenbecherwerkes (Becher und deren Anbringung nicht dargestellt);

Fig. 34      einen Schnitt entlang der Linie XXXIV-XXXIV von Figur 33;

Fig. 35      eine Vorderansicht (links) und eine Seitenansicht (rechts) einer Kettenlasche mit einem Erleichterungsausschnitt.

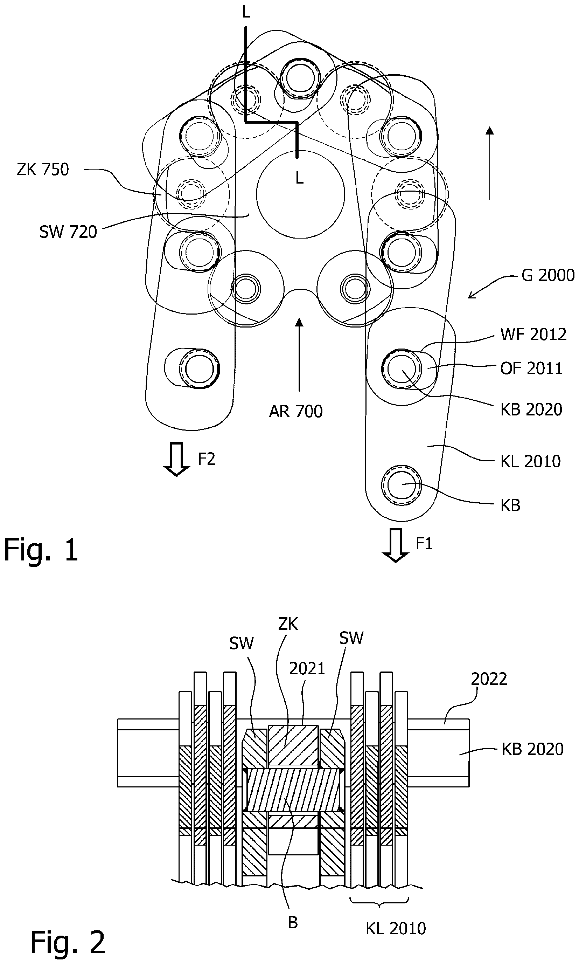

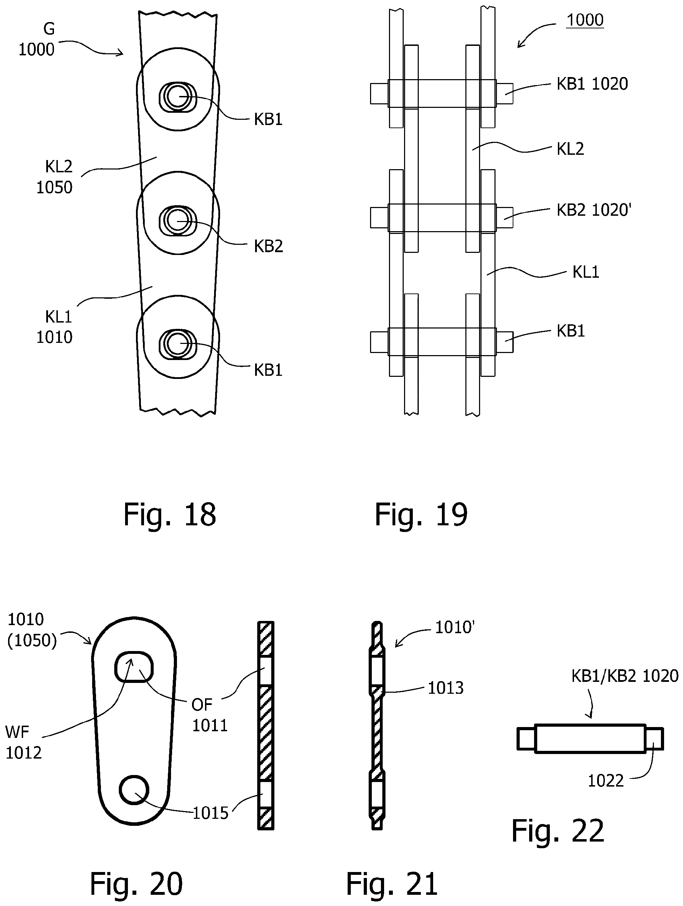

Die Figuren 1-4 zeigen einen Gelenkkettenantrieb gemäß einem eigenständigen Aspekt der vorliegenden Erfindung. Wie aus der Seitenansicht von Figur 1 erkennbar ist, enthält der Gelenkkettenantrieb ein Antriebskettenrad 700 (= AR), an dessen Zähnen kreisrunde Zwischenkörper 750 (= ZK) drehbeweglich gelagert sind. Das Antriebskettenrad hat somit (äußerlich) einen ähnlichen Aufbau wie die Antriebskettenräder, welche in der WO 2013/060823 A1 beschrieben sind (dort Figuren 19, 43).

Um eine besonders hohe Stabilität des Antriebskettenrades 700 zu erreichen, welche es beispielsweise für den Einsatz im Stahlwasserbau geeignet machen, können einige Änderungen vorgesehen sein. Beispielsweise ist aus Figur 2 ersichtlich, dass die Lagerung der Zwischenkörper ZK auf einem Bolzen B erfolgt (vgl. WO 2010/108816 A1), welcher in entsprechenden Öffnungen der beiden (identischen) Seitenwände SW beispielsweise durch Presssitz und Verschweißen befestigt ist. Optional kann dieser Bolzen B zusätzlich mit Öffnungen für ein Schmiermittel versehen sein (nicht dargestellt). Des Weiteren ist aus Figur 2 erkennbar, dass die radial äußeren Ränder der Seitenwände SW eine Fase aufweisen können, um einen leichteren Eingriff in eine Gelenkkette zu erlauben.

Eine wesentliche Neuerung betrifft die Gelenkkette 2000 (= G). Diese besteht in der dargestellten Ausführungsform aus (identischen) Kettenlaschen 2010 (= KL), von denen pro Kettenglied vier Stück parallel angeordnet sind.

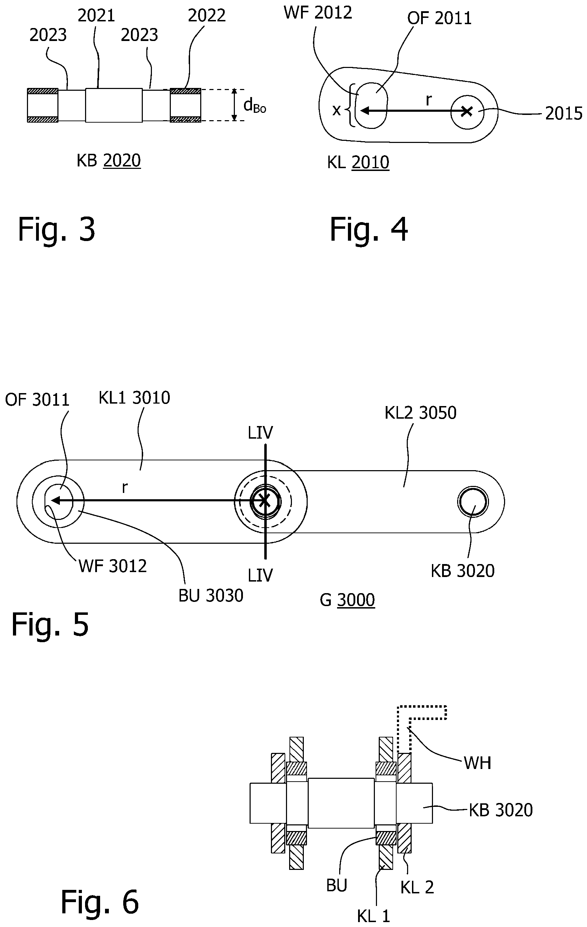

Figur 4 zeigt eine einzelne Kettenlasche KL in einer Seitenansicht. Dabei ist zu erkennen, dass diese eine Öffnung 2011 (= OF) in Form eines Langlochs aufweist sowie am gegenüberliegenden Ende ein zweites, kreisrundes Loch 2015. In dem zweiten Loch 2015 ist der in Figur 3 separat dargestellte (abschnittsweise zylindrische) Kettenbolzen 2020 (= KB) mit der Fläche 2023 geringeren Durchmessers angeordnet. Des Weiteren erstreckt sich dieser Abschnitt 2023 des Kettenbolzens KB durch das Langloch OF der Kettenlasche des vorangehenden Kettengliedes. Aufgrund der Langloch-Form ist der Kettenbolzen KB somit verschiebebeweglich in dieser Öffnung OF. Die Kettenglieder werden daher nicht wie üblich nur drehbeweglich, sondern zusätzlich auch verschiebebeweglich gekoppelt.

Bei der in Figur 1 dargestellten, aufeinander abgestimmten Dimensionierung von Antriebskettenrad AR und Gelenkkette G erfolgte das Einlaufen (Pfeil nach oben) des rechten Kettentrumes in das Antriebskettenrad nun so, dass nach dem Kontaktieren der Kettenbolzen KB durch die Zwischenkörper ZK im weiteren Verlauf zunächst keine Relativbewegung mehr zwischen den Zwischenkörpern und den Kettenbolzen erfolgt. Dementsprechend ist hier der Verschleiß minimiert. Das Abknicken der Kettenglieder erfolgt dadurch, dass die Kettenbolzen KB in den Langloch-Öffnungen OF der Kettenlaschen abwälzen, und zwar auf einer Wälzfläche 2012 (= WF). Die Wälzfläche WF und/oder die Kettenbolzen KB sind zu diesem Zweck vorzugsweise gehärtet. Die Wälzbewegung der Kettenbolzen entlang der Wälzfläche stellt eine besonders verschleißarme Möglichkeit des Abknickens der Kettenglieder dar.

Wie aus Figur 4 erkennbar ist, liegt die Wälzfläche WF vorzugsweise auf einem Kreisbogen mit Radius r um den Mittelpunkt des Rundlochs 2015. Bei jeder Position des Kettenbolzens KB entlang dieser Wälzfläche WF hat das entsprechende Kettenglied dann effektiv dieselbe Länge. Die Wälzbewegung ist also ohne Einfluss auf die Teilung der Gelenkkette. Der Radius der Wälzfläche kann aber optional auch kleiner ausgeführt werden, was die Pressung im Kontaktbereich zwischen Kettenbolzen und Wälzfläche verringert.

Der bevorzugte bzw. minimale Wert für die Länge x der Wälzstrecke des Kettenbolzens (Wälzkurve) in der Langloch-Öffnung OF lässt sich wie folgt angeben:

$$x = d_{Bo} \cdot \pi / z$$

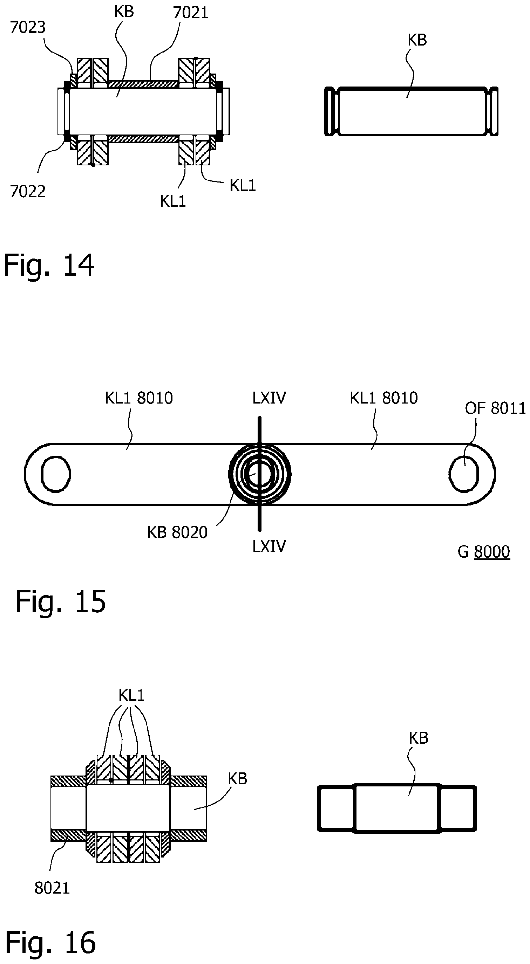

mit $d_{BO}$ = Durchmesser des Kettenbolzens, z = Zähnezahl des Antriebskettenrades (sechs in Figur 1), wobei diese Formel für den Fall einer Wälzfläche pro Kettengelenk gilt. Wenn zwei Wälzflächen pro Kettengelenk vorhanden sind (z. B. Figur 14, 15, 16), lautet die entsprechende Formel:

$$x = d_{Bo} \cdot \pi / 2z$$

Mit dem Teilungswinkel $\tau$ (in Bogenmaß rad) lässt sich der erste Fall auch ausdrücken als

$$x = d_{Bo} \cdot \tau$$

Auf der auslaufenden Seite der Gelenkkette G wird in der Regel eine Relativbewegung zwischen Kettenbolzen und Zwischenkörpern auftreten. Daher wird die Anordnung der Gelenkkette G vorzugsweise so gewählt, dass am auslaufenden Trum eine Kraft F2 wirkt (z. B. nur das Eigengewicht der Kette), die sehr viel geringer ist als die Kraft F1 am einlaufenden Trum (z. B. das Gewicht eines Wehrtores). Bei dem Gelenkkettenantrieb von Figur 1 ist somit darauf zu achten, dass bei den Kettenlaschen auf der stärker belasteten Seite die Langloch-Öffnungen OF zum Antriebskettenrad weisen.

Bei einem Einsatz z. B. im Stahlwasserbau hat der beschriebene Gelenkkettenantrieb den Vorteil, die dort auftretenden extrem hohen Kräfte bei sehr kleinem Bauraum zu bewältigen. Des Weiteren wird durch die Verwendung von Langloch-Öffnungen in der Gelenkkette ein Festrosten von Kettengelenken auch bei sehr langem Nichtgebrauch verhindert. Um ein Aussteifen der Kettenlaschen an ihren Kontaktflächen zu vermeiden, können zwischen die Laschen Scheiben z. B. aus Buntmetall gelegt werden (nicht dargestellt).

Gemäß Figur 2 greift das Antriebskettenrad am mittleren Abschnitt 2021 des Kettenbolzens KB an. Aus der Abbildung sowie aus Figur 3 ist auch erkennbar, dass der Kettenbolzen KB an beiden Seiten über die Kettenlaschen KL hinaus steht. Zur Bewältigung sehr hoher Lasten können diese Überstände 2022 genutzt werden, um über weitere Antriebskettenräder (nicht dargestellt) zusätzliche Zugkräfte auf den Kettenbolzen zu übertragen. Für eine solche dreifach gelagerte Kette bzw. mehrschnittige Anordnung können an den Enden des Kettenbolzens KB vorzugsweise aufgeschrumpfte bzw. aufgepresste Bundringe 2022 vorgesehen sein. Diese haben dann vorzugsweise den gleichen Außendurchmesser wie der mittlere Abschnitt 2021 des Kettenbolzens KB. Die Bundringe können gleichzeitig als Sicherung der Kettenlaschen gegen ein Abrutschen bzw. gegen Verlust dienen.

Die Zwischenkörper 750 sind vorzugsweise kreisrund und können wälz- oder gleitgelagert sein oder verschiebebeweglich sein. Letzteres kommt insbesondere für die Verarbeitung sehr hoher Kräfte wie z. B. im Stahlwasserbau in Frage. Neben den Wälzflächen WF können insbesondere der Kettenbolzen KB sowie die Zwischenkörper 750 und die diese tragenden Bolzen B gehärtet sein.

In Abwandlung der in den Figuren dargestellten Ausführungsform könnte anstelle des Rundlochs 2015 auch ein zweites Langloch in den Kettenlaschen vorgesehen sein. Typischerweise würde dann die Erstreckung des ersten Langlochs 2011 entsprechend kleiner werden.

In den Figuren 5-16 sind jeweils in einer Seitenansicht und in einem Schnitt verschiedene Ausführungsformen von Gelenkketten G dargestellt, welche das oben erläuterte Prinzip einer verschiebebeweglichen Lagerung von Kettenbolzen KB in Langloch-Öffnungen OF nutzen und dabei für andere Anwendungsfälle optimiert sind. Insbesondere ist eine Anwendung solcher Gelenkketten in Kettenbecherwerken möglich.

Bei herkömmlichen Becherwerken befindet sich der Antrieb häufig in einer Kopfstation der vertikal verlaufenden Gelenkkette, wobei die Drehung der Kette mit einer hohen Kettengeschwindigkeit erfolgt, um einen Materialauswurf zu erzielen. Bedingt hierdurch kommt es zu einer hohen Aufschlagkomponente beim Einlaufen der Gelenkkette ins Antriebskettenrad und somit zu starken radialen und transversalen dynamischen Belastungen. Weitere Probleme sind Ermüdungserscheinungen an den Kettenbolzen, den Kettenlaschen und/oder an den Bechern.

Die Figuren 5 und 6 zeigen eine erste Gelenkkette 3000 (= G), welche sich zur Lösung der beschriebene Probleme in einem Becherwerk verwenden lässt. Figur 5 lässt in einer Seitenansicht eine erste Kettenlasche 3010 (= KL1) und eine zweite Kettenlasche 3050 (= KL2) erkennen, welche in dieser Form mehrfach wiederholt zur Gesamtkette G zusammengesetzt sind. Die zweite Kettenlasche KL2 hat an ihren Enden zwei kreisrunde Ausnehmungen, in denen jeweils ein Kettenbolzen 3020 (= KB) angeordnet ist (z. B. eingepresst). Die erste Kettenlasche KL1 hat ebenfalls an ihren Enden zwei kreisrunde Ausnehmungen, in denen jeweils eine Buchse 3030 (= BU) angeordnet ist (z. B. eingepresst). Die genannten Buchsen BU haben entlang ihrer Achse eine Langloch-Öffnung 3011 (= OF) (mit Längserstreckung quer zur Achse der Kettenlasche), welche von einem Kettenbolzen KB durchgegriffen wird. Somit wird der Kettenbolzen KB verschiebebeweglich in den Öffnungen OF der Buchsen gelagert.

Wie aus Figur 6 erkennbar ist, erstrecken sich die Buchsen BU axial nur über ein kurzes Stück in etwa von der Breite der zugehörigen Kettenlaschen KL1, lassen also den mittleren Teil des Kettenbolzens KB frei. Daher kann das Antriebskettenrad (nicht dargestellt) direkt am Kettenbolzen angreifen, welcher eine höhere Gestaltfestigkeit als eine Buchse hat. Des Weiteren sind bei dieser Ausführungsform die ersten Kettenlaschen KL1 innen, d. h. zwischen den zweiten Kettenlaschen KL2 angeordnet. In der Figur ist ferner angedeutet, dass an den zweiten Kettenlaschen KL2 ein Winkelhalter WH angeordnet sein kann, an welchem wiederum die Becher (nicht dargestellt) eines Becherwerkes angebracht werden können.

Die Öffnungen OF der Buchsen BU haben eine Wälzfläche 3012 (= WF), an welcher der Kettenbolzen KB beim Abknicken der Gelenkkette abwälzen kann. Diese Wälzfläche WF hat vorzugsweise die Form eines Kreisbogens um den Mittelpunkt des zweiten Kettengelenkes, wobei der Radius r dieses Kreisbogens optional die Länge der Gelenkteilung plus einem halben Bolzen- bzw. Buchsendurchmesser haben kann. Die Öffnungen OF in den Buchsen BU können beispielsweise durch Fräsen erzeugt werden. Auf den Kettenbolzen KB können zu beiden Seiten der Kettenlaschen optional zwei Scheiben aufgepresst sein (nicht dargestellt), um einen sicheren Sitz der Kettenlaschen auf dem Kettenbolzen zu gewährleisten.

Die beschriebene Gelenkkette 3000 ist verhältnismäßig leicht, sie lässt sich gut montieren und demontieren, ist wendbar bzw. drehbar, und sie weist eine gute Dauerfestigkeit auf.

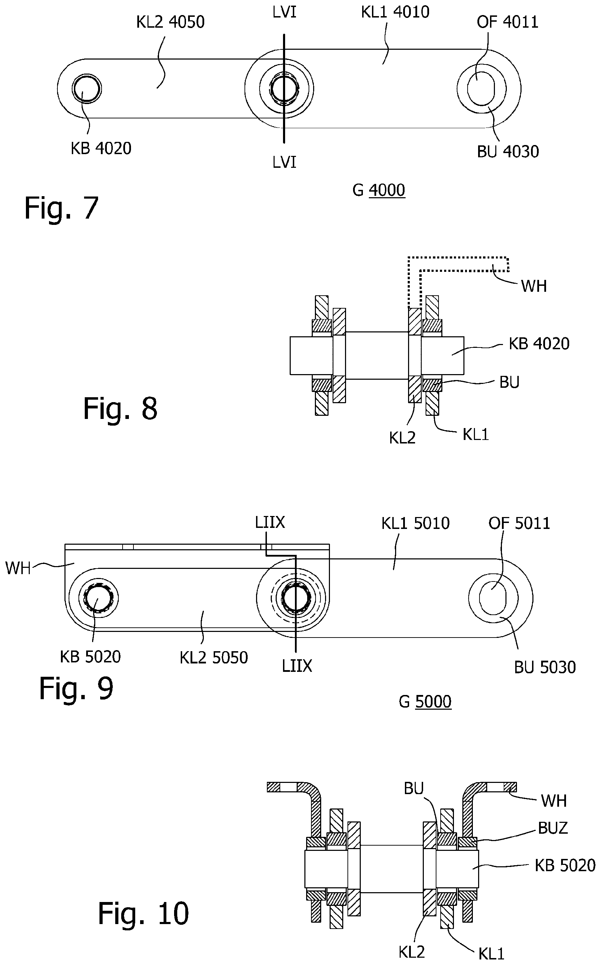

Die in den Figuren 7 und 8 dargestellte Ausführungsform einer Gelenkkette 4000 unterscheidet sich von der beschriebene Gelenkkette 3000 dadurch, dass die ersten Kettenlaschen KL1 außen auf den Kettenbolzen KB liegen und die zweiten Kettenlaschen KL2 innen. Beim Einsatz in einem Becherwerk ist eine derartige Ausführungsform bevorzugt.

Die Figuren 9 und 10 zeigen eine weitere Gelenkkette 5000. Diese ist eine Abwandlung der Gelenkkette 4000, bei welcher der Winkelhalter WH nicht an einer der Kettenlaschen, sondern separat am Kettenbolzen 5020 gelagert ist. Wie dargestellt können die Winkelhalter WH beispielsweise auf zusätzlichen Buchsen BUZ an den überstehenden Außenenden des Kettenbolzen KB angeordnet sein.

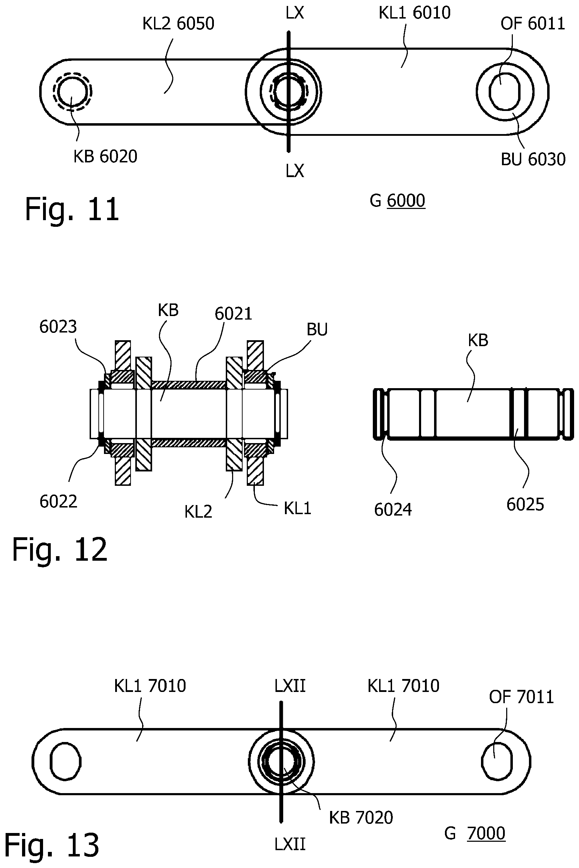

Die Figuren 11-16 zeigen drei weitere Ausführungsformen von Gelenkketten mit Langlochöffnungen für eine abwälzende Bewegung des Kettenbolzens, welche für eine Becherwerkskette, aber auch für andere Anwendungen wie beispielsweise Förderketten geeignet sind.

Figur 11 zeigt eine erste solche Gelenkkette 6000 (= G) in einer Seitenansicht, während Figur 12 einen Schnitt entlang der Linie LX (links) bzw. separat den Kettenbolzen (rechts) darstellt. Der Aufbau ist im Wesentlichen identisch dem der Gelenkkette 4000, so dass nachfolgend nur auf die Unterschiede eingegangen werden soll. Diese bestehen zum einen darin, dass um den Mittelteil des Kettenbolzens KB herum eine Buchse oder Rolle 6021 angeordnet ist, die vorzugsweise gehärtet ist und als Distanzstück zwischen den Kettenlaschen dient. An dieser Buchse 6021 kann ein Kettenrad angreifen.

Des Weiteren sind die Kettenlaschen gegen ein Abrutschen nach außen durch einen Schließring 6022 oder eine andere übliche Sicherung gesichert, wobei vorzugsweise eine Scheibe 6023 zwischen dieser Sicherung und den Kettenlaschen angeordnet ist. Der Schließring 6022 ist in einer Nut 6024 des Kettenbolzens gelagert. Der Kettenbolzen KB kann weiterhin optional Rändelungen 6025 als Aufdickung haben, um einen festen/verdrehsicheren Sitz in der Kettenlasche KL2 zu haben.

Die in den Figuren 13 und 14 dargestellte Gelenkkette 7000 (G) besteht aus gleichartigen Kettenlaschen 7010 (KL1). Diese tragen an beiden Enden jeweils ein

Langloch 7011 (OF), in welchem ein Kettenbolzen 7020 (KB) abwälzen kann. Der Schnitt entlang der Linie LXII in Figur 14 zeigt, dass wiederum eine Buchse 7021 als Distanzstück sowie Schließringe oder andere Sicherungen 7022, 7023 vorgesehen sind.

Die in Figur 15 und 16 dargestellte Gelenkkette 8000 (G) stellt eine Abwandlung der vorbeschriebenen Gelenkkette 7000 dar, bei welcher die (gleichartigen)

Kettenlaschen KL1 ohne axiale Distanz unmittelbar nebeneinander im Mittelstück des Kettenbolzens KB angeordnet sind. Gesichert werden sie in dieser Position durch die auf beide Enden des Kettenbolzens aufgepressten oder aufgeschrumpften Hülsen 8021, an welchen der Angriff eines Antriebskettenrades erfolgt.

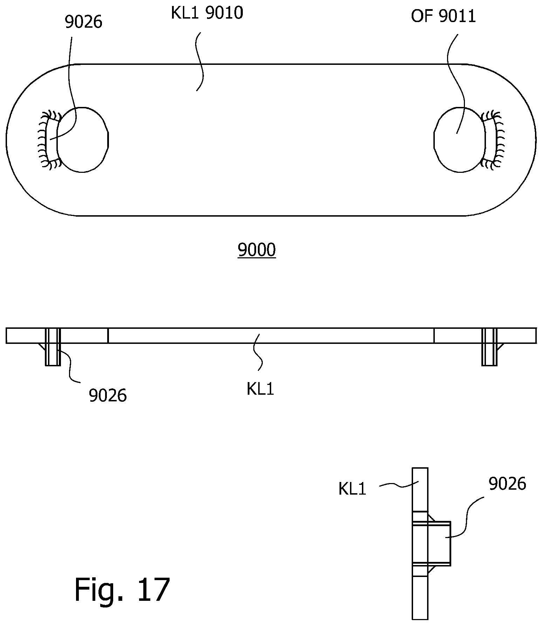

Figur 17 zeigt eine Kettenlasche 9010 (KL1), welche eine Abwandlung der Kettenlaschen 3010-6010 bzw. 7010-8010 darstellt. Die Kettenlasche 9010 hat Langlöcher 9011 (OF), an welchen im Wälzbereich Bleche 9025 entsprechender Krümmung (auch "Wälzbleche" genannt) befestigt sind (z. B. eingeschweißt). Hierdurch kann die zur Verfügung stehende Wälzfläche entsprechend vergrößert werden.

Die Teilungslöcher OF können dabei mit passenden Aussparungen versehen sein, welche die in die Kettenlasche ragenden Wälzbleche aufnehmen. Alternativ können die Wälzbleche auch ein- oder zweiseitig seitlich der Teilungslöcher angeschweißt sein.

Des Weiteren können die Wälzbleche 9026 an einer Seite (wie dargestellt) oder an beiden Seiten der Kettenlasche KL1 überstehen. Bei nur einseitigem Überstand werden die inneren Kettenlaschen vorzugsweise mit der Wälzblech-freien oder "glatten" Seite nach innen (zur lichten Weite hin) montiert, die äußeren Kettenlaschen dagegen mit der Wälzblech-freien Seite nach außen.

Durch die Wahl rostfreier Werkstoffe für die Wälzbleche und Kettenbolzen kann eventuellen Korrosionsproblemen begegnet werden.

Die Figuren 18-24 zeigen eine weitere Ausführungsform einer erfindungsgemäßen Gelenkkette G bzw. 1000 mit einer verschiebebeweglichen Lagerung von Kettenlaschen auf Kettenbolzen.

Figur 18 zeigt in einer Seitenansicht und Figur 19 in einer Vorderansicht einen Ausschnitt aus der Gelenkkette 1000. Die Kettenglieder werden abwechselnd von zwei axial beabstandeten Außenlaschen KL1 bzw. 1010 und zwei axial beabstandeten Innenlaschen KL2 bzw. 1050 gebildet.

Figur 20 zeigt eine einzelne Außenlasche 1010 in einer Vorderansicht (links) und einer Schnittansicht (rechts). Die Kettenlasche 1010 weist an einem Ende ein Rundloch 1015 und am gegenüberliegenden Ende eine längliche Öffnung OF bzw. 1011 auf, wobei die genannte Öffnung am äußeren Rand eine Wälzfläche WF bzw. 1012 hat. Die Innenlaschen 1050 sind vorzugsweise identisch zu den Außenlaschen 1010 gemäß Figur 20 ausgebildet, so dass diese nicht separat dargestellt und erläutert werden müssen.

Figur 21 zeigt eine alternative Ausführungsform einer Kettenlasche 1010', welche beispielsweise durch Schmieden hergestellt sein kann. Dabei sind die Öffnungen von Verdickungen 1013 umgeben, damit im Betrieb die Pressung im Kontaktbereich unterhalb von tolerablen Grenzwerten bleibt. Insgesamt kann die Kettenlasche 1010' auf diese Weise sehr Gewicht sparend ausgelegt werden.

Figur 22 zeigt separat die Kettenbolzen KB1 bzw. KB2 der Gelenkkette 1000. Im Prinzip können die Kettenbolzen identisch sein und eine einfache Zylinderform ohne Kanten und Sprünge haben, was Belastungen durch Kerbwirkung vermeidet und die Fertigung vereinfacht. Des Weiteren können die Kettenbolzen optional radial überstehende und im Durchmesser verringerte Enden 1022 aufweisen, an denen beispielsweise Winkelhalter (z. B. zur Befestigung der Becher) oder dergleichen befestigt werden können.

Figur 23 veranschaulicht in einer schematischen Aufsicht auf die Gelenkkette 1000 den dort zur Anwendung kommenden vorteilhaften Aufbau, welcher in ähnlicher Weise auch bei beliebigen anderen Gelenkketten (ohne verschiebebewegliche Lagerung von Kettenlaschen) zum Einsatz kommen kann. Die Gelenkkette 1000 besteht demnach aus einer Folge von Einheiten, wobei eine dieser Einheiten in der Figur durch eine stärkere Strichlinie dargestellt ist und die folgenden Komponenten umfasst:

- zwei Außenlaschen KL1;

- einen ersten Kettenbolzen KB1, auf dem die genannten Außenlaschen KL1 axial beabstandet befestigt sind, beispielsweise durch einen Presssitz;

- einen zweiten Kettenbolzen KB2, auf welchem die Außenlaschen KL1 mit ihrem jeweils anderen Ende beweglich (vorliegend verschiebebeweglich) gelagert sind;

- zwei Innenlaschen KL2, welche zwischen den genannten Außenlaschen KL1 auf dem zweiten Kettenbolzen KB2 angeordnet und dort beispielsweise durch Presssitz befestigt sind.

Die Verknüpfung derartiger Einheiten erfolgt dadurch, dass die Innenlaschen KL2 einer Einheit beweglich auf den ersten Bolzen KB1' der nachfolgenden Einheit zwischen deren Außenlaschen gelagert sind.

Der beschriebene Kettenaufbau hat den Vorteil, dass ohne zusätzliche Maßnahmen zur Sicherung der Kettenlaschen ein stabiler, nicht auseinander fallender Aufbau der Gelenkkette erreicht wird, und zwar allein durch den Presssitz der Kettenlaschen auf den Kettenbolzen.

Figur 24 zeigt in einer Seitenansicht die Anordnung der beschriebenen Gelenkkette 1000 auf einem (zahnlosen) Antriebsrad AR. Ein solcher Gelenkkettenantrieb kann beispielsweise in einem Kettenbecherwerk vorgesehen werden. Bezüglich der vorteilhaften Wirkungen kann auf die obige Beschreibung zur Figur 1 verwiesen werden. Das Einlaufen der Kettenglieder in das Antriebsrad AR erfolgt mit dem Langloch-Ende voran, damit die gewünschte Wälzbewegung stattfinden kann. Falls gewünscht, kann die Gelenkkette 1000 nach längerem Gebrauch gewendet werden, um eine symmetrische Abnutzung zu erreichen.

Figur 25 zeigt im Vergleich zu Figur 24 einen herkömmlichen Antrieb für ein Kettenbecherwerk oder dergleichen, bei dem eine herkömmliche Gelenkkette G0 eingesetzt wird. Beim Einlaufen dieser Gelenkkette G0 müssen die Kettenglieder abknicken, was sowohl Reibung innerhalb der Kettengelenke GL (Bolzen in Buchse) als auch zwischen Kettengelenk (Buchse) und Antriebsrad AR verursacht. Aufgrund der hohen Last F1 in diesem Teil der Kette sind die entsprechenden Reibungsverluste sehr groß. Beim auslaufenden Trum ergeben sich durch Reibung innerhalb der Gelenke GL und zwischen Gelenkbuchse und Antriebsrad weitere Verluste.

Im Gegensatz hierzu entstehen beim erfindungsgemäßen Gelenkkettenantrieb von Figur 24 auf der einlaufenden Seite keine Reibungsverluste zwischen Antriebsrad AR und Kettenbolzen, da dort keine Relativbewegung stattfindet. Weiterhin findet in den Kettengelenken eine Wälzbewegung statt, welche nahezu verlustfrei ist. Auf der auslaufenden Seite der Gelenkkette 1000 kommt es zu einer Reibbewegung zwischen dem Antriebsrad AR und den Kettenbolzen, wobei diese jedoch aufgrund der geringeren Kraft F2 verhältnismäßig klein ist. Auch ist der Reibweg kürzer, da der Bolzendurchmesser kleiner als ein entsprechender Buchsendurchmesser ist.

Eine genaue Berechnung der Reibungsverluste bei der herkömmlichen Gelenkkette G0 von Figur 25 im Vergleich zur erfindungsgemäßen Gelenkkette 1000 von Figur 24 ergibt, dass im herkömmlichen Fall ca. 5,5 % der eingesetzten Antriebsleistung für Reibung verloren gehen (Berechnung für: Kettenteilung = 180 mm,

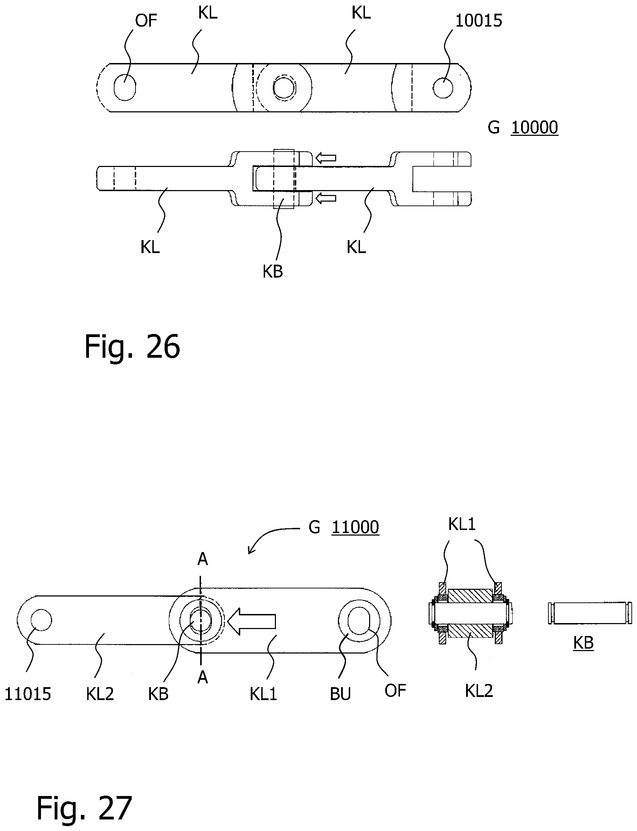

Buchsendurchmesser = 70 mm, Bolzendurchmesser = 40 mm, Zähnezahl = 15, Reibwert = 0,20, F1 = 120.000 N, F2 = 80.000 N). Beim erfindungsgemäßen Antrieb von Figur 24 beträgt dieser Verlust nur ca. 0,19 %, ist also um einen Faktor von mehr als 28 geringer! Figur 26 zeigt in einer Vorderansicht (oben) und einer Draufsicht (unten) eine Gabellaschenkette G bzw. 10000. Die Gabellaschenkette G enthält gleichartige, Y-förmige bzw. gabelförmige Kettenlaschen KL, die beispielsweise geschmiedet, gegossen, oder auch aus Flachmaterial hergestellt sein können. Im letztgenannten Fall werden typischerweise zwei (gekröpfte) Laschenhälften produziert und anschließend durch Vernieten, Verschweißen oder dergleichen miteinander verbunden.

Bei der Gabellaschenkette erfolgt der Eingriff der Zähne eines Antriebskettenrades immer auf der Seite der Gabel (s. Blockpfeile). Dort sind Rundlöcher 10015 zur Aufnahme des Kettenbolzens KB vorgesehen, während am Laschenauge (gegenüberliegendes Ende der Kettenlasche KL) ein Langloch OF vorgesehen ist, in dem der Kettenbolzen KB abwälzen kann.

Der Kettenbolzen KB muss auf der Seite der Gabel keinen Presssitz haben, sondern kann dort leichtes Spiel haben. Er kann auf übliche Art gesichert sein, beispielsweise mit Schließring.

Figur 27 zeigt eine Vorderansicht (links) einer Blocklaschenkette G bzw. 11000. Im mittleren Teil der Abbildung ist ein Schnitt entlang der Linie A-A dargestellt, im rechten Teil der Kettenbolzen KB.

Die Blocklaschenkette G enthält zwei parallel angeordnete erste Kettenlaschen KL1 (Außenlaschen), die zwischen sich eine zweite Kettenlasche KL2 (Blocklasche) aufnehmen. In den Außenlaschen KL1 sind Langlöcher OF zu Aufnahme des Kettenbolzens KB vorgesehen. Im dargestellten Beispiel befinden sich diese

Langlöcher OF in eingepressten Buchsen BU. Die Außenlaschen KL1 könnten alternativ auch ohne Buchsen ausgeführt sein und/oder als Schmiedeteile mit Verdickungen im Bereich der Teilungslöcher.

Die Blocklasche KL2 hat an beiden Enden Rundlöcher 11015 zur Aufnahme des Kettenbolzens KB im Presssitz. Der Kettenbolzen KB kann auf übliche Art gesichert sein.

Bei der Blocklaschenkette erfolgt der Eingriff der Zähne eines Antriebskettenrades üblicherweise an der Blocklasche KL2 (s. Blockpfeil). Ein Zahneingriff über die Außenlaschen wäre ebenfalls möglich, wobei in diesem Falle die Außenlaschen die Rundlöcher und die Blocklasche die Langlöcher aufweisen würde.

Generell ist der Gabellaschenkette und der Blocklaschenkette gemeinsam, dass der Angriff der Zähne eines Antriebskettenrades an den Kettenlaschen erfolgt (und nicht an Gelenkteilen wie Bolzen, Buchsen, oder Rollen). An der Stelle des Zahneingriffs wird vorteilhafterweise ein Rundloch vorgesehen, denn bei einem Langloch könnte es zu einem Abrutschen des Gelenkbolzens mit entsprechend höherem Verschleiß kommen. Bei Angriff von Kettenrädern direkt an Gelenkteilen bestehen derartige Einschränkungen nicht.

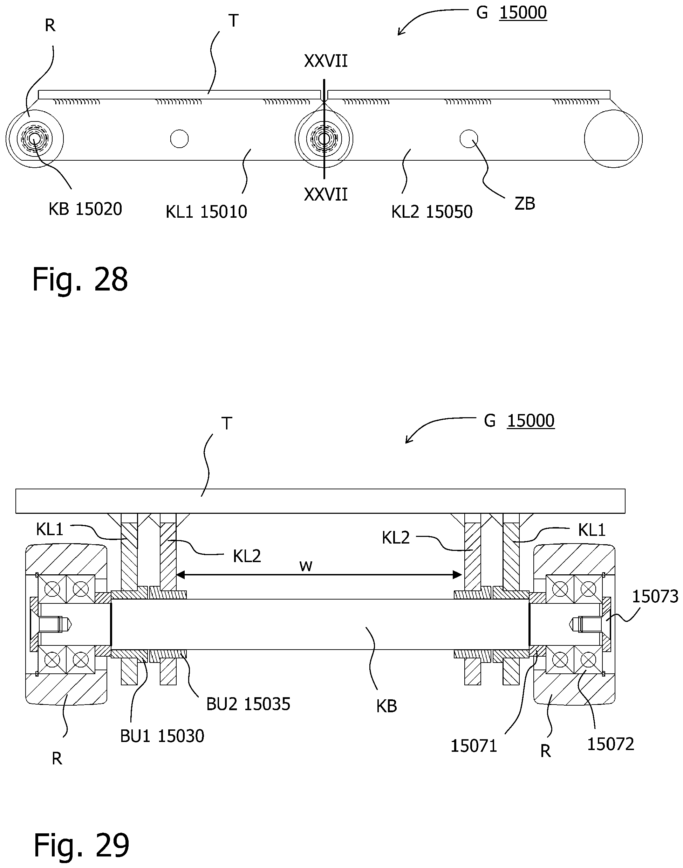

Mit Hilfe der Figuren 28 und 29 wird nun ein Kettenförderer gemäß der Erfindung beispielhaft beschrieben. Dieser Aspekt der Erfindung betrifft Kettenförderer, insbesondere Plattenbandförderer zur Förderung von Schüttgut und Stückgut, auch zur Förderung von Automobilen und Nutzfahrzeugen in der Automobil- bzw. Nutzfahrzeugindustrie. Derartige Kettenförderer sind aus der WO 2013/060823 A1 bekannt.

Figur 28 zeigt eine Seitenansicht auf zwei Kettenglieder einer Gelenkkette 15000 (= G) gemäß einer Ausführungsform eines Plattenbandes. Die hierbei verwendeten Konstruktionsprinzipien können auch bei anderen Anwendungen mit Vorteil eingesetzt werden. Figur 29 zeigt einen zugehörigen Schnitt entlang der Linie XXVII-XXVII von Figur 28.

Das in Figur 28 linke Kettenglied besteht aus zwei axial beabstandeten Außenlaschen 15010 (= KL1), während das rechte Kettenglied aus zwei Innenlaschen 15050 (= KL2) besteht. An den genannten Kettenlaschen können optional jeweils ein oder mehrere Zwischenbolzen bzw. Zwischenbuchsen ZB angebracht sein.

Der Aufbau eines Kettengelenkes ist in Figur 29 erkennbar. Das Kettengelenk enthält einen Kettenbolzen 15020 (= KB), auf welchem in einem verhältnismäßig kurzen axialen Abstand w zwei Außenlaschen KL1 und zwei Innenlaschen KL2 gelagert sind. Die Lagerung erfolgt dabei über Buchsen 15030 (= BU1, für die Außenlaschen KL1) und 15035 (= BU2, für die Innenlaschen KL2). Diese Buchsen sind typischerweise in Teilungslöcher der Kettenlaschen eingepresst und vorzugsweise gehärtet. Sofern die Buchsen BU1, BU2 wie dargestellt Bunde haben, sind diese vorzugsweise gegeneinanderweisend angeordnet.

Der typischerweise gehärtete Kettenbolzen KB kann zwischen den Kettenlaschen zylindrisch mit gleichbleibendem Durchmesser sein, was eine besonders einfache Herstellung ermöglicht.

An den Kettenlaschen KL1, KL2 können Anbauelemente angebracht sein. Im dargestellten Fall sind beispielsweise Tragplatten T direkt an den Außenlaschen KL1 bzw. Innenlaschen KL2 angeschweißt.

Der Kettenbolzen KB kann optional zu einer oder zu beiden Seiten verlängert sein, um beispielsweise dort Laufrollen zu tragen. Im dargestellten Fall sind die vorzugsweise gehärteten zwei Laufrollen R über eine Lagerung 15072 (z. B. Rillenkugellager) auf Überständen des Kettenbolzen gelagert, wobei sie durch Distanzringe 15071 auf einer gewünschten axialen Position gehalten werden (und eine axiale Verschiebung der Kettenlaschen verhindern). Außenseitig können die Rollen R wie dargestellt über eine Unterlegscheibe axial fixiert werden, die mit einer Befestigung 15073 (z. B. einer Schraube) am Kettenbolzen KB festgelegt ist.

Der beschriebene einfache Aufbau der Gelenkkette 15000 wird insbesondere dann möglich, wenn diese in einem Gelenkkettenantrieb eingesetzt wird, bei dem ein lastarmes oder lastfreies Abknicken der Kettenglieder erfolgt. In diesem Falle kann nämlich die Gelenkfläche entsprechend reduziert werden, und anstelle von sich über die gesamte axiale Länge des Kettenbolzens erstreckenden Buchsen können wie dargestellt kurze Trägerbuchsen eingesetzt werden. Hieraus resultieren weitere Vereinfachungen des Aufbaus. Beispielsweise können die Kettenlaschen direkt an eine Tragplatte T oder andere Anbauelemente angeschweißt werden, was zusätzliche Schraubverbindungen oder ein Abwinkeln der Laschen und dergleichen erspart.

Die Montage (und Demontage) der Gelenkkette G erfolgt einfach dadurch, dass die Kettenbolzen KB durch die Innen- und Außenlaschen gesteckt und dann mit üblichen Mitteln gesichert werden.

Während des Betriebs der Gelenkkette sind die Kettenbolzen KB gegen Verdrehung (Mitrotieren) durch die Klemmwirkung geschützt, die aus der Ketten-Zugkraft und/oder aus der Auflast auf die Kettenlaschen resultiert (das Drehmoment der Rollenlagerung ist ohnehin sehr klein).

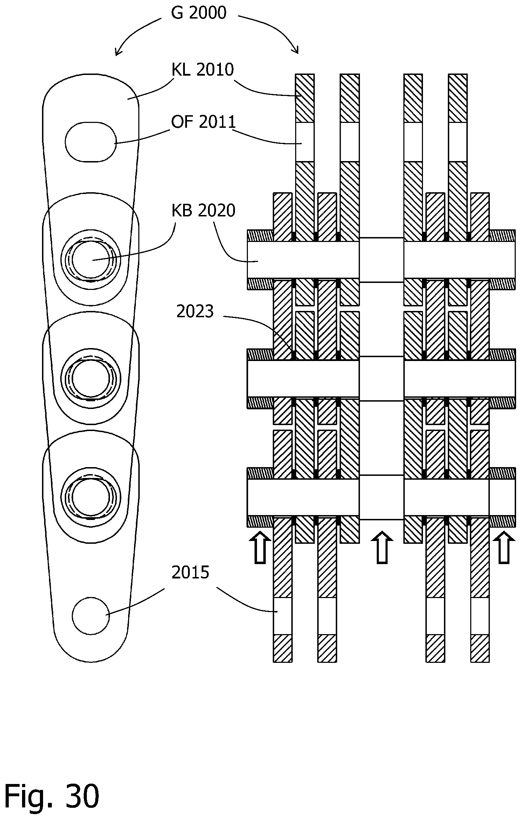

In Figur 30 ist noch einmal ein gestreckter Abschnitt der Gelenkkette 2000 (= G) der Figuren 1-4 dargestellt. Die Kette kann als dreifach gelagerte Hubkette beispielsweise im Stahlwasserbau eingesetzt werden, wobei Zähne eines Kettenrades an drei Stellen eines jeden Gelenkes angreifen können, nämlich zwischen den Kettenlaschen KL und an den Außenenden der Kettenbolzen KB (s. Blockpfeile). Zwischen den Kettenlaschen KL können sich vorzugsweise Distanzscheiben 2023 befinden, um einen direkten Reibkontakt der Kettenlaschen zu vermeiden.

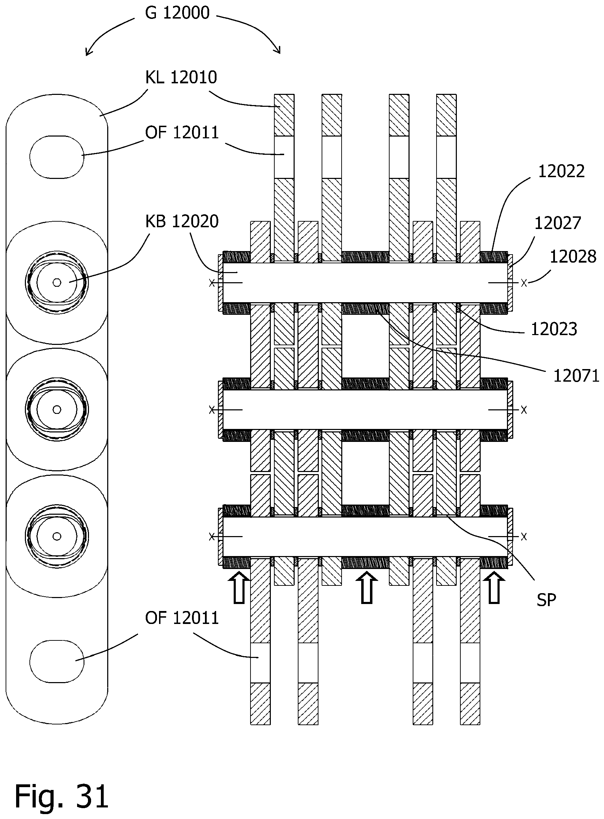

Figur 31 zeigt eine Abwandlung der vorbeschriebenen Gelenkkette, bei der es sich ebenfalls um eine dreifach gelagerte Hubkette handelt. Bei dieser Gelenkkette 12000 (G) sind alle (identisch ausgebildeten) Kettenlaschen 12010 (KL) an beiden Enden mit Langlöchern 12011 (OF) versehen und damit verschiebebeweglich auf den Kettenbolzen 12020 (KB) gelagert. Insgesamt hat die Gelenkkette G (wie die Gelenkkette 2000) einen bezüglich ihrer Längsachse spiegelsymmetrischen Aufbau, wobei auf jedem Kettenbolzen KB folgende Reihenfolge von Komponenten angeordnet ist:

- eine Schraube 12028, welche in der Stirnseite des Kettenbolzens sitzt und dort eine Scheibe 12027 fixiert, durch welche alle Komponenten auf dem Kettenbolzen gesichert werden;

- einen Bundring 12022, an welchem Außenzähne eines Antriebskettenrades (nicht dargestellt) angreifen können;

- eine erste Kettenlasche KL eines ersten Kettengliedes;

- eine Distanzscheibe 12023;

- eine erste Kettenlasche eines zweiten, angrenzenden Kettengliedes;

- eine Distanzscheibe;

- eine zweite Kettenlasche des ersten Kettengliedes;

- eine Distanzscheibe;

- eine zweite Kettenlasche des zweiten Kettengliedes;

- eine mittig auf dem Kettenbolzen gelagerte Distanzbuchse 12071, an welcher Innenzähne eines Antriebskettenrades angreifen können;

-    den bisher beschriebenen Aufbau in umgekehrter Reihenfolge.

Aus Figur 31 ist weiterhin erkennbar, dass jede Kettenlasche mit Spiel bzw. einem Luftspalt SP auf dem jeweiligen Kettenbolzen KB gelagert ist.

Wenn die Gelenkkette 12000 über ein Kettenrad (nicht dargestellt) läuft, wälzt das ein- bzw. auslaufende Glied auf dem Kettenbolzen KB ab, der im Kontakt zum Kettenrad steht und im Wesentlichen die gleiche Bewegung wie das Kettenrad ausführt. Hierdurch können normale Kettenräder verwendet werden, und der Ein- und Auslauf der Gelenkkette erfolgt verschleißfrei aufgrund der abwälzenden Bewegung zwischen Kettenbolzen und Kettenlaschen sowie des relativen Stillstandes zwischen Kettenbolzen und Kettenrad. Durch die Verwendbarkeit herkömmlicher Kettenräder wird die Gelenkkette insbesondere auch im Stahlwasserbau einsetzbar, wo sehr große Kräfte bei kleinem Bauraum aufgenommen werden müssen.

Der bevorzugte bzw. minimale Wert für die Länge x der Wälzstrecke des Kettenbolzens (Wälzkurve) in den Langloch-Öffnungen OF der Gelenkkette 12000 ergibt sich bei der vorstehend erwähnten Verwendung herkömmlicher Kettenräder (ohne bewegliche Zwischenkörper) aus der Formel

$$x = d_{Bo} \cdot \pi / z,$$

wobei $d_{BO}$ der Durchmesser des Kettenbolzens und z die Zähnezahl des Antriebskettenrades ist.

Vorteilhaft an der Gelenkkette 12000 ist weiterhin ihr besonders einfacher Aufbau. Der Kettenbolzen KB kann im Wesentlichen glatt durchgehend und ohne Durchmessersprünge ausgeführt werden. Keines der Bauteile muss mit Presssitz montiert werden, was eine einfache Montage und Demontage ermöglicht. Insbesondere können auch die Distanzscheiben 12023, die Distanzbuchse 12071 und/oder der Bundring 12022 auf dem Kettenbolzen KB Spiel haben. Gemäß einer alternativen Ausführungsform können sie jedoch auch anders befestigt sein, z. B. aufgepresst. Sinnvoll ist es allerdings, bei Distanzscheiben und Bundring/Distanzbuchse die gleiche Befestigungsart vorzusehen, damit sich diese Bauteile gleich verhalten und es nicht zu einer ungleichmäßigen Kräfteeinleitung durch die Kettenräder kommt.

Der Außendurchmesser und der Bohrungsdurchmesser der Distanzbuchse 12071 und der Bundringe 12022 sind vorzugsweise identisch ausgeführt. Des Weiteren sind die Distanzbuchse 12071, der Bundring 12022 und/oder die Distanzscheiben 12023 von ihrem Außendurchmesser her vorteilhafterweise so dimensioniert, dass sie die Langlöcher OF abdecken und somit vor einer Verschmutzung schützen. Alle Bauteile sind durch die lösbare Schraubverbindung auf dem Kettenbolzen gesichert.

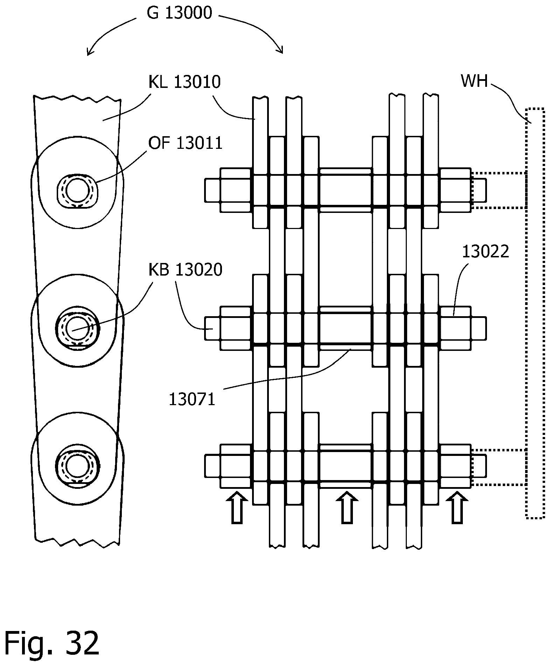

Die Figuren 32-34 zeigen eine Gelenkkette 13000 (= G), welche eine Abwandlung der Gelenkkette 2000 darstellt, die für den Einsatz in einem Kettenbecherwerk angepasst ist.

Die Abwandlung besteht zum einen darin, dass die Kettenbolzen 13020 (= KB) axial verlängert ist, so dass dort ein Winkelhalter WH für Becher angebracht werden kann. Vorzugsweise ist dabei jeder Becher an Kettenbolzen angebracht, die nicht zum selben Kettenglied gehören (vgl. DE 10 2009 051 043 A1).

Des Weiteren ist auf dem Mittelstück eines jeden Kettenbolzens KB ein Distanzring 13071 (vorzugsweise lose) angeordnet. Auf den nach außen ragenden Abschnitten der Kettenbolzen KB sind zwei Bundringe 13022 angeordnet, und zwar vorzugsweise aufgepresst. An jedem dieser Ringe 13071, 13022 können Antriebskräfte angreifen. Beim Kettenbecherwerk können diese Kräfte von einem Antriebsrad mit Zähnen oder einem Antriebsrad ohne Zähne (Antriebsscheibe) übertragen werden.

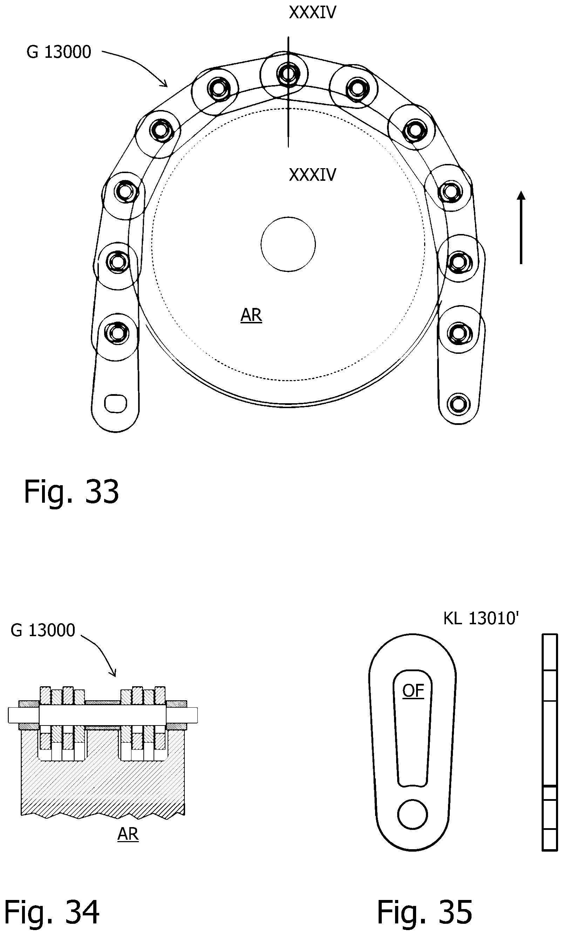

Eine zahnlose Antriebsscheibe AR ist in Figur 33 erkennbar. Figur 34 stellt einen Schnitt entlang der Linie XXXIV-XXXIV von Figur 33 dar, welcher zwei Ausdrehungen in der Antriebsscheibe AR für das Eintauchen der Kettenlaschen erkennen lässt.

Durch den dreifachen Eingriff können der Kettenbolzen KB und die Ringe 13071, 13022 verhältnismäßig dünn ausgebildet werden. Dies ermöglicht es wiederum, die Teilung der Gelenkkette zu verkleinern.

Figur 35 zeigt eine alternative Konstruktion einer Kettenlasche 13010', welche beispielsweise in der Gelenkkette 13000 verwendet werden kann. Bei dieser Kettenlasche 13010' ist zur weiteren Gewichtsreduktion und zur Vergleichmäßigung von Spannungen das Langloch OF zu einem Erleichterungsausschnitt erweitert, der sich typischerweise über mehr als 50% der Länge der Lasche erstreckt.

Anstelle der in den diversen Ausführungsbeispielen gezeigten dreifachen Lagerung der Gelenkketten kann allgemein eine n-fache Lagerung (n = 1, 2, 3, 4, ...) erfolgen, wenn die Kettenlaschen mit entsprechenden Abständen auf dem Kettenbolzen angeordnet werden. Ebenso können in den diversen Ausführungsbeispielen anstelle der dort gezeigten Realisierungen quasi beliebige Anzahlen von Kettenlaschen parallel innerhalb eines Kettengliedes angeordnet sein (z. B. fünf oder sechs statt der in Figur 31 gezeigten vier).

Wenn in der vorliegenden Anmeldung der Einsatz von Kettenrädern "gemäß der DE 10 2011 054 911 ", "gemäß der vorliegenden Anmeldung" und/oder "gemäß der WO2010/108816A1" erwähnt wird, soll dies nur auf eine besonders vorteilhafte Ausführungsform hinweisen und nicht ausschließen, dass auch Kettenräder anderer geeigneter Bauformen eingesetzt werden können.

**Bezugszeichen**

| Antriebs(ketten)rad | AR, 700 |
|---|---|
| Zwischenkörper | ZK, 750 |
| Distanzring | 12071, 13071, 15071 |
| Lagerung | 15072 |
| Schraube | 15073 |
| Buchse | 6021, 7021, 8021, 12021 |
| Sicherung, Bundring | 6022, 7022, 12022, 13022 |
| Scheibe | 2023, 6023, 7023, 12023 |
| Rille | 6024 |
| Rändelung | 6025 |
| Wälzblech | 9026 |
| Scheibe | 12027 |
| Schraube | 12028 |
| Bolzen | B, B1, B2 |
| Kettenbuchse | BU, BU1, BU1, BUZ, 15030, 15035, 3030, 4030, 5030, 6030 |
| Gelenkkette | G, 1000, 2000, 3000, 4000, 5000, 6000, 7000, 8000, 9000, 10000, 11000, 12000, 13000, 15000 |
| Kettenbolzen | KB, KB1, KB2, 1020, 2020, 3020, 4020, 5020, 6020, 7020, 8020, 12020, 13020, 15020 |
| Kettenlasche | KL, KL1, 1010, 2010, 3010, 4010, 5010, 6010-9010, 12010, 13010, 15010 |
| zweite Kettenlasche | KL2, 1050, 3050, 4050, 5050, 6050 |
| Öffnung | OF, 1011, 2011, 3011, 4011, 5011, 6011, 7011, 8011, 9011, 12011, 13011 |
| Radius | r |
| Tragplatte | T |
| Spalt | SP |
| Wälzfläche | WF, 1012, 2012, 3012 |
| Winkelhalter | WH |
| Zugkräfte | F1, F2 |
| Zwischenbolzen, Zwischenbuchse | ZB |

**Patentansprüche**

1. Gelenkkettenantrieb, enthaltend:

eine Gelenkkette (G, 1000-13000) umfassend:

a) mindestens eine erste Kettenlasche (KL, KL1, 1010, 2010, ... 9010) mit einer Öffnung (OF, 1011, 2011, ... 9011);
b) eine zugehörige zweite Kettenlasche (KL, KL2, 1050, 2010, 3050, 4050, 5050, 6050, 7010, 8010, 9010) mit einem daran angebrachten Kettenbolzen (KB, KB1, KB2, 1020, 2020, ... 7020), der verschiebebeweglich in der vorgenannten Öffnung gelagert ist;

wobei die Öffnung (OF) eine Wälzfläche (WF, 1012, 2012, 3012) aufweist, entlang welcher der Kettenbolzen (KB, KB1, KB2) abwälzen kann,
**dadurch gekennzeichnet, dass**

- der Kettenbolzen (KB, KB1, KB2) zumindest abschnittsweise die Form eines Kreiszylinders hat;
- und der Gelenkkettenantrieb ein in die genannte Gelenkkette eingreifendes Antriebsrad (AR, AR1, AR2, 700) enthält;

wobei der Kettenbolzen (KB, KB1, KB2) der zweiten Kettenlasche (KL, KL2) beim Umlauf der Gelenkkette um das Antriebsrad zumindest abschnittsweise eine Wälzbewegung in der Öffnung (OF) der ersten Kettenlasche (KL, KL1) ausführt.

2. Gelenkkettenantrieb nach einem der übrigen Ansprüche,
**dadurch gekennzeichnet, dass** der Kettenbolzen (KB, KB1, KB2) die Form eines Kreiszylinders hat.

3. Gelenkkettenantrieb nach einem der übrigen Ansprüche,
**dadurch gekennzeichnet, dass** zumindest ein Teil der Wälzfläche (WF) auf einem Kreisbogen um den Drehpunkt eines zweiten Kettengelenkes der ersten Kettenlasche (KL, KL1) liegt.

4. Gelenkkettenantrieb nach einem der übrigen Ansprüche,
**dadurch gekennzeichnet, dass** die Öffnung (OF) eine Ausnehmung in der ersten Kettenlasche (KL, KL1) ist.

5. Gelenkkettenantrieb nach einem der übrigen Ansprüche,
**dadurch gekennzeichnet, dass** die Öffnung (OF) in einer mit der ersten Kettenlasche (KL1) verbundenen Buchse (BU, 3030-6030) ausgebildet ist.

6. Gelenkkettenantrieb nach einem der übrigen Ansprüche,
**dadurch gekennzeichnet, dass** ein Träger (WH) für Anbauelemente an dem Kettenbolzen (KB) gelagert ist.

7. Gelenkkettenantrieb nach einem der übrigen Ansprüche,
**dadurch gekennzeichnet, dass** die erste Kettenlasche (KL, KL1) im Wesentlichen identisch zur zweiten Kettenlasche (KL, KL2) ausgebildet ist.

8. Gelenkkettenantrieb nach mindestens einem der übrigen Ansprüche,
**dadurch gekennzeichnet, dass** mindestens zwei erste Kettenlaschen (KL, KL1) und/oder mindestens zwei zweite Kettenlaschen (KL, KL2) vorgesehen sind, die parallel am selben Kettenbolzen (KB, KB1, KB2) gelagert sind.

9. Gelenkkettenantrieb nach einem der übrigen Ansprüche, wobei die Gelenkkette (G, 1000) eine Folge von Einheiten mit mindestens zwei Außenlaschen (KL1, 1010), mindestens einer Innenlasche (KL2, 1050), einem ersten Kettenbolzen (KB1, 1020) und einem zweiten Kettenbolzen (KB2, 1020') aufweist, wobei in einer Einheit:

- die Außenlaschen an einem ersten Ende auf dem ersten Kettenbolzen (KB1) befestigt sind und zwischen ihnen die Innenlasche beweglich auf dem ersten Kettenbolzen angeordnet ist;
- die Außenlaschen an einem zweiten Ende beweglich auf dem zweiten Kettenbolzen (KB2) gelagert sind und zwischen ihnen auf dem zweiten Kettenbolzen die Innenlasche einer nachfolgenden Einheit befestigt ist.

**Claims**

1. Link chain drive containing:

a link chain (G, 1000-13000) comprising:

a) at least one first chain link plate (KL, KL1, 1010, 2010, ... 9010) with an opening (OF, 1011, 2011, ... 9011);
b) a corresponding second chain link plate (KL, KL2, 1050, 2010, 3050, 4050, 5050, 6050, 7010, 8010, 9010) with a chain pin (KB, KB1, KB2, 1020, 2020, ... 7020) attached thereto, the chain pin being mounted in the above mentioned opening such that it can be moved by shifting;

wherein the opening (OF) has a roll area (WF, 1012, 2012, 3012), along which the chain pin (KB, KB1, KB2) can roll,

**characterized in that**

- the chain pin (KB, KB1, KB2) has at least in sections the form of a circular cylinder;
- and that the link chain drive comprises a drive wheel (AR, AR1, AR2, 700) engaging in the mentioned link chain;

wherein the chain pin (KB, KB1, KB2) of the second chain link plate (KL, KL2) carries out at least in sections a rolling motion in the opening (OF) of the first chain link plate (KL, KL1) when the link chain is circulating around the drive chain wheel.

2. Link chain drive according to one of the other claims,
   **characterized in that** the chain pin (KB, KB1, KB2) has the form of a circular cylinder.

3. Link chain drive according to one of the other claims,
   **characterized in that** at least a part of the roll area (WF) lies on a circular arc around the pivot point of a second chain link of the first chain link plate (KL, KL1).

4. Link chain drive according to one of the other claims,
   **characterized in that** the opening (OF) is a recess in the first chain link plate (KL, KL1).

5. Link chain drive according to one of the other claims,
   **characterized in that** the opening (OF) is formed in a socket (BU, 3030-6030) that is connected to the first chain link plate (KL1).

6. Link chain drive according to one of the other claims,
   **characterized in that** a carrier (WH) for attachments is mounted at the chain pin (KB).

7. Link chain drive according to one of the other claims,
   **characterized in that** the first chain link plate (KL, KL1) is formed basically identically to the second chain link plate (KL, KL2).

8. Link chain drive according to at least one of the other claims,
   **characterized in that** at least two first chain link plates (KL, KL1) and/or at least two second chain link plates (KL, KL2) are provided which are mounted parallel to each other at the same chain pin (KB, KB1, KB2).

9. Link chain drive according to one of the other claims, wherein the link chain (G, 1000) has a sequence of units with at least two outer plates (KL1, 1010), at least one inner plate (KL2, 1050), a first chain pin (KB1, 1020) and a second chain pin (KB2, 1020'), wherein in one unit:

   - the outer plates at a first end are mounted on the first chain pin (KB1) and between them the inner plate is arranged movably on the first chain pin;
   - the outer plates at a second end are mounted movably on the second chain pin (KB2) and between them the inner plate of a following unit is mounted on the second chain pin.

**Revendications**

1. Mécanisme d'entraînement d'une chaîne articulée, contenant:

   - une chaîne articulée (G, 1000-13000) comprenant:

     a) au moins un premier maillon de chaîne (KL, KL1, 1010, 2010, ... 9010) avec une ouverture (OF, 1011, 2011, ... 9011);
     b) un deuxième maillon de chaîne correspondant (KL, KL2, 1050, 2010, 3050, 4050, 5050, 6050, 7010, 8010, 9010) avec un tourillon de chaîne (KB, KB1, KB2, 1020, 2020, ... 7020) fixé au deuxième maillon de chaîne et monté dans l'ouverture mentionnée tellement ce qu'il peut être déplacé;

selon lequel l'ouverture (OF) présente une surface de roulement (WF, 1012, 2012, 3012), le long de laquelle le tourillon de chaîne (KB, KB1, KB2) peut rouler,
**caractérisé en ce que**

- le tourillon de chaîne (KB, KB1, KB2) a au moins par sections la forme d'un cylindre circulaire;
- et que le mécanisme d'entraînement d'une chaîne articulée a une roue d'entraînement (AR, AR1, AR2, 700) qui engage dans la chaîne articulée mentionnée;

selon lequel le tourillon de chaîne (KB, KB1, KB2) du deuxième maillon de chaîne (KL, KL2) effectue au moins par sections un mouvement de roulement dans l'ouverture (OF) du premier maillon de chaîne (KL, KL1) quand la chaîne articulée circule autour de la roue d'entraînement de chaîne.

2. Mécanisme d'entraînement d'une chaîne articulée selon une des autres revendications,
**caractérisé en ce que** le tourillon de chaîne (KB, KB1, KB2) a la forme d'un cylindre circulaire.

3. Mécanisme d'entraînement d'une chaîne articulée selon une des autres revendications,
**caractérisé en ce qu'**au moins une partie de la surface de roulement (WF) est située sur un arc de cercle autour le pivot d'une deuxième articulation de chaîne du premier maillon de chaîne (KL, KL1).

4. Mécanisme d'entraînement d'une chaîne articulée selon une des autres revendications,
**caractérisé en ce que** l'ouverture (OF) est une cavité dans le premier maillon de chaîne (KL, KL1).

5. Mécanisme d'entraînement d'une chaîne articulée selon une des autres revendications,
**caractérisé en ce que** l'ouverture (OF) est formée dans une douille (BU, 3030-6030) connectée avec le premier maillon de chaîne (KL1).

6. Mécanisme d'entraînement d'une chaîne articulée selon une des autres revendications,
**caractérisé en ce qu'**un support (WH) est monté au tourillon de chaîne (KB) pour des pièces rapportées.

7. Mécanisme d'entraînement d'une chaîne articulée selon une des autres revendications,
**caractérisé en ce que** le premier maillon de chaîne (KL, KL1) est formé essentiellement identiquement au deuxième maillon de chaîne (KL, KL2).

8. Mécanisme d'entraînement d'une chaîne articulée selon l'une quelconque des autres revendications,
**caractérisé en ce qu'**au moins deux premiers maillons de chaîne (KL, KL1) et/ou au moins deux deuxièmes maillons de chaîne (KL, KL2) sont prévus, qui sont montés en parallèle au même tourillon de chaîne (KB, KB1, KB2).

9. Mécanisme d'entraînement d'une chaîne articulée selon une des autres revendications, selon lequel la chaîne articulée (G, 1000) présente une séquence d'unités avec au moins deux maillons extérieurs (KL1, 1010), au moins un maillon intérieur (KL2, 1050), un premier tourillon de chaîne (KB1, 1020) et un deuxième tourillon de chaîne (KB2, 1020'), selon lequel dans une unité:

- les maillons extérieurs à une première extrémité sont montés sur le premier tourillon de chaîne (KB1) et entre eux le maillon intérieur est disposé de façon mobile sur le premier tourillon de chaîne;
- les maillons extérieurs à une deuxième extrémité sont montés de façon mobile sur le deuxième tourillon de chaîne (KB2) et entre eux le maillon intérieur d'une unité suivante est monté sur le deuxième tourillon de chaîne.

Fig. 1

Fig. 2

2023  2021  2023  2022

KB 2020

## Fig. 3

WF 2012  OF 2011

x  r

2015

KL 2010

## Fig. 4

OF 3011  KL1 3010  KL2 3050

LIV

r

LIV

WF 3012  KB 3020

BU 3030  G 3000

## Fig. 5

WH

KB 3020

BU  KL 2

KL 1

## Fig. 6

KL2 4050    LVI    KL1 4010    OF 4011

KB 4020    LVI    BU 4030

G 4000

Fig. 7

WH

KB 4020

BU

KL2    KL1

Fig. 8

LIIX    KL1 5010    OF 5011

WH

KB 5020    KL2 5050    LIIX    BU 5030

Fig. 9    G 5000

BU    WH

BUZ

KB 5020

KL2    KL1

Fig. 10

KL2 6050    LX    KL1 6010    OF 6011

KB 6020    LX    BU 6030

## Fig. 11

G 6000

6023    KB    6021    BU    KB

6022    KL2    KL1    6024    6025

## Fig. 12

KL1 7010    LXII    KL1 7010    OF 7011

KB 7020

LXII    G 7000

## Fig. 13

7023    KB    7021

7022    KL1    KL1

## Fig. 14

KB

KL1 8010    LXIV    KL1 8010    OF 8011

KB 8020    LXIV

G 8000

## Fig. 15

KL1

KB

8021

## Fig. 16

9026    KL1 9010    OF 9011

9000

9026    KL1

KL1    9026

Fig. 17

Fig. 18

Fig. 19

Fig. 20

Fig. 21

Fig. 22

Fig. 23

KB1  KL1  KB2  KL2  KB1'

1000

Fig. 24

G
1000

AR

F2  F1

Fig. 25

G0

GL

AR

F2  F1

**Fig. 26**

**Fig. 27**

**Fig. 28**

**Fig. 29**

Fig. 30

G 12000

KL 12010

OF 12011

12022

12027

12028

KB 12020

12023

12071

OF 12011

SP

Fig. 31

Fig. 32

G 13000

XXXIV

XXXIV

AR

Fig. 33

G 13000

AR

Fig. 34

KL 13010'

OF

Fig. 35

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 2010108816 A1
- WO 20101088 A1
- WO 2013060823 A
- GB 187039 A
- WO 2013060823 A1
- DE 102009051043 A1
- DE 102011054911